# EUROPEAN PATENT APPLICATION

(11) **EP 4 843 808 A1**
(43) Date of publication of application: **25.11.2026**
(21) Application number: 26178031.6
(22) Date of filing: 11.05.2026
(51) Int. Cl.: B60K 15/03, B60K 15/063

(54) **HYDROGEN-ENGINE VEHICLE**

(30) Priority: 22.05.2025 JP 2025085356
(71) Applicant: Toyota Jidosha Kabushiki Kaisha, Toyota-shi, Aichi-ken 471-8571 (JP)
(72) Inventor: NAKAGAKI, Atsushi, Toyota-shi, Aichi-ken,, 471-8571 (JP)
(74) Representative: Winter, Brandl - Partnerschaft mbB

(57) **Abstract**

In a hydrogen-engine vehicle, a hydrogen engine is mounted in an engine compartment that is located in front of a passenger compartment. The hydrogen-engine vehicle includes a center tunnel provided at a central portion in a vehicle width direction below a floor of the passenger compartment and extending in a front-rear direction. A cylindrical large-capacity hydrogen tank and a cylindrical small-capacity hydrogen tank having a smaller diameter than the large-capacity hydrogen tank are disposed inside the center tunnel. The small-capacity hydrogen tank is disposed so as to overlap the large-capacity hydrogen tank in the vehicle width direction and a height direction.

## Description

### BACKGROUND

### 1. Field

The present disclosure relates to a hydrogen-engine vehicle including a hydrogen engine.

### 2. Description of Related Art

JP2023-19927 discloses a hydrogen-engine vehicle including a hydrogen tank provided in a rear portion of the vehicle.

For example, from the standpoint of ensuring sufficient passenger-compartment space, the hydrogen tank may be installed below the floor of the passenger compartment. Below the vehicle floor, components such as the wheel suspension system and the exhaust pipe of the hydrogen engine are also arranged. In addition, when the hydrogen tank is mounted below the floor, the vehicle's minimum ground clearance needs to be taken into account. Accordingly, it has been difficult to increase the capacity of the hydrogen tank installed below the floor of the passenger compartment.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An aspect of the present disclosure provides a hydrogen-engine vehicle in which a hydrogen engine is mounted in front of a passenger compartment. The hydrogen-engine vehicle includes a center tunnel provided at a central portion in a vehicle width direction below a floor of the passenger compartment and extending in a front-rear direction, a cylindrical large-capacity hydrogen tank, and a cylindrical small-capacity hydrogen tank having a smaller diameter than the large-capacity hydrogen tank. The large-capacity hydrogen tank is installed such that at least part of the large-capacity hydrogen tank is located inside the center tunnel. The small-capacity hydrogen tank is disposed so as to overlap the large-capacity hydrogen tank in the vehicle width direction and a height direction.

Other features and aspects will be apparent from the following detailed description, the drawings, and the claims.

### BRIEF DESCRIPTION OF THE DRAWINGS

Fig. 1 is a schematic diagram showing the arrangement of components in a hydrogen-engine vehicle according to an embodiment, as viewed from below.
Fig. 2 is a schematic diagram showing the arrangement of the components in the hydrogen-engine vehicle of the embodiment, as viewed from above.
Fig. 3 is a cross-sectional view taken along line 3-3 in Fig. 2.
Fig. 4 is a schematic diagram showing the arrangement of the large-capacity hydrogen tank and the small-capacity hydrogen tank.
Fig. 5 is a cross-sectional view showing the arrangement of the large-capacity hydrogen tank and the small-capacity hydrogen tank according to a modification of the hydrogen-engine vehicle.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

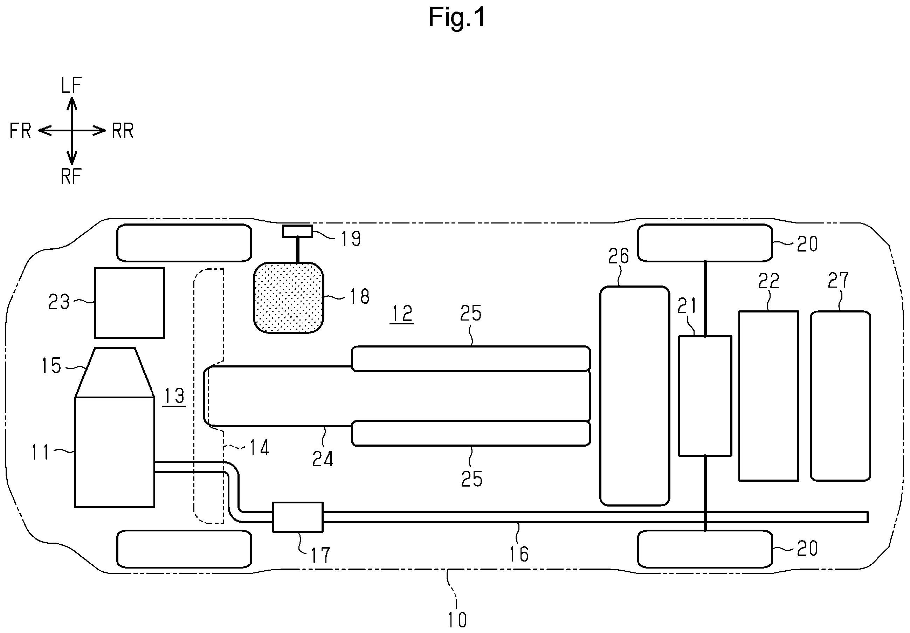

Hereinafter, an embodiment of a hydrogen-engine vehicle will be described in detail with reference to Figs. 1 to 4. The hydrogen-engine vehicle 10 according to the present embodiment is constructed as a series-type hybrid electric vehicle employing a front-engine, rear-wheel-drive layout. Of the arrows shown in the drawings, "FR," "RR," "LF," "RF," "UP," and "DW" indicate forward, rearward, leftward, rightward, upward, and downward, respectively, with reference to the vehicle forward direction.

### Drive System of the Hydrogen-Engine Vehicle 10

First, the configuration of a drive system of the hydrogen-engine vehicle 10 will be described with reference to Fig. 1. A passenger compartment 12 is provided inside the hydrogen-engine vehicle 10. The passenger compartment 12 is configured such that a passenger cabin in which occupants ride and a luggage compartment in which luggage is carried form a single, continuous space. The passenger compartment 12 may alternatively be configured such that the passenger cabin and the luggage compartment are separated into respective compartments. An engine compartment 13 in which the hydrogen engine 11 is installed is provided in front of the passenger compartment 12 in the hydrogen-engine vehicle 10. A dash panel 14 is provided between the passenger compartment 12 and the engine compartment 13 to partition these components.

The engine compartment 13 includes a generator 15 that generates power by receiving the power of the hydrogen engine 11. An electric drive unit 21 that is supplied with power to drive rear wheels 20 is installed in a rear portion of the hydrogen-engine vehicle 10. The electric drive unit 21 includes, for example, a speed reduction mechanism and a differential mechanism in addition to a motor. The hydrogen-engine vehicle 10 includes a battery 22 that stores power generated by the generator 15. The battery 22 is installed behind the electric drive unit 21 below the floor of the passenger compartment 12. The generator 15, the battery 22, and the electric drive unit 21 are electrically connected to each other via a power control unit 23 that is installed in the engine compartment 13.

An exhaust pipe 16 is connected to the hydrogen engine 11. A catalyst device 17 is installed in the exhaust pipe 16 to perform selective catalytic reduction of nitrogen oxides using urea solution as a reducing agent. A urea-solution tank 18 that stores urea solution to be added to the exhaust gas flowing into the catalyst device 17 is mounted on the hydrogen-engine vehicle 10. The urea-solution tank 18 is installed in a front portion below the floor of the passenger compartment 12 and on the left side of the central portion in the vehicle width direction. In the present embodiment, the urea-solution tank 18 is a resin tank. The left side surface of the hydrogen engine 10 is provided with a urea-solution filling port 19 through which urea solution is filled into the urea-solution tank 18 from outside the hydrogen-engine vehicle 10. The exhaust pipe 16 extends in the front-rear direction below the floor of the passenger compartment 12. The exhaust pipe 16 is disposed below the floor of the passenger compartment 12 and on the right side of the central portion in the vehicle width direction.

### Arrangement of Hydrogen Tanks in Hydrogen-Engine Vehicle 10

The hydrogen-engine vehicle 10 includes five cylindrical hydrogen tanks 24 to 27 that store hydrogen to be combusted by the hydrogen engine 11. Two of the hydrogen tanks 26, 27 are installed in the rear portion of the hydrogen-engine vehicle 10. The hydrogen tank 26 is disposed in front of the electric drive unit 21. The hydrogen tank 27 is disposed behind the battery 22.

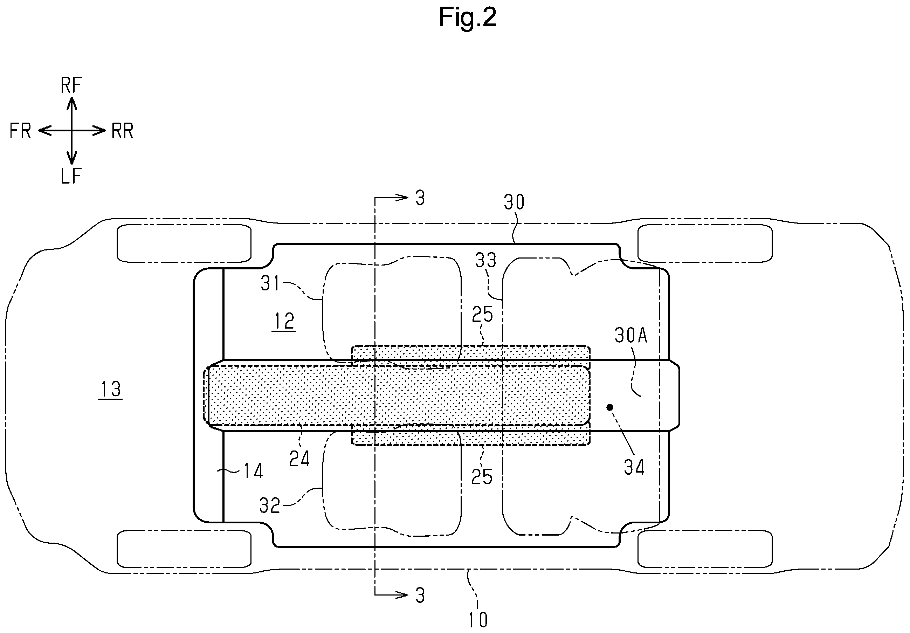

Fig. 2 shows, as viewed from above, the arrangement of the remaining three hydrogen tanks, namely one hydrogen tank 24 and two hydrogen tanks 25. A driver's seat 31 and a passenger's seat 32 are installed in the front portion of the passenger compartment 12, spaced apart in the vehicle width direction. A rear seat 33 is installed behind the driver's seat 31 and the passenger's seat 32. A floor tunnel 30A is formed at the central portion of a floor panel 30, which forms the floor surface of the passenger compartment 12, in the vehicle width direction. The floor tunnel 30A protrudes upward from opposite sides of the central portion of the floor panel 30. A center tunnel 34 is provided in a lower portion of the floor tunnel 30A below the floor of the passenger compartment 12. The center tunnel 34 extends in the front-rear direction through the space between the driver's seat 31 and the passenger's seat 32.

Inside the center tunnel 34, a cylindrical large-capacity hydrogen tank 24 extending in the front-rear direction is installed. Inside the center tunnel 34, two cylindrical small-capacity hydrogen tanks 25 having a smaller diameter than the large-capacity hydrogen tank 24 are further installed in the vicinity of the large-capacity hydrogen tank 24. The longitudinal length, that is, the dimension in the front-rear direction, of each small-capacity hydrogen tank 25 is also smaller than that of the large-capacity hydrogen tank 24. The front end of the large-capacity hydrogen tank 24 is disposed forward of the front end of the small-capacity hydrogen tank 25. The urea-solution tank 18 is located forward of the small-capacity hydrogen tank 25 below the floor of the passenger compartment 12.

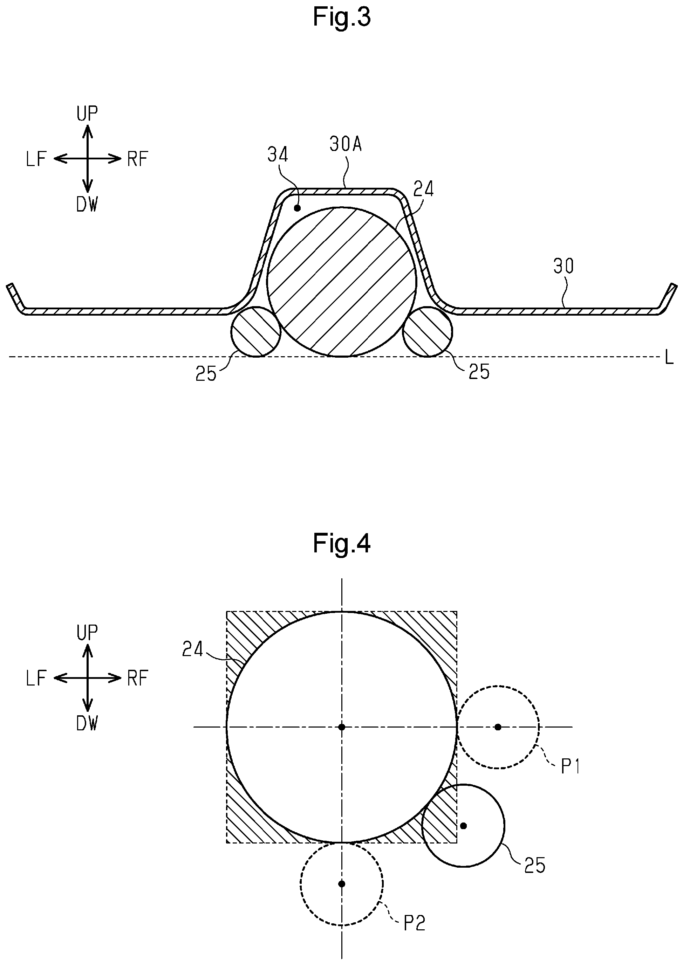

Fig. 3 shows the arrangement of the large-capacity hydrogen tank 24 and the small-capacity hydrogen tanks 25 in the cross-section taken along line 3-3 in Fig. 2. The dotted line L shown in Fig. 3 indicates the lower-limit position of the installation space for, for example, the hydrogen tanks below the floor of the passenger compartment 12. The lower-limit position is set based on requirements such as ensuring the minimum ground clearance of the hydrogen-engine vehicle 10.

Each of the large-capacity hydrogen tank 24 and the two small-capacity hydrogen tanks 25 is installed such that its lower end coincides with the lower-limit position of the installation space. Further, the inner ends of the two small-capacity hydrogen tanks 25 in the vehicle width direction are arranged on opposite sides of the large-capacity hydrogen tank 24 and within the outer ends of the large-capacity hydrogen tank 24 in the vehicle width direction. Thus, the small-capacity hydrogen tanks 25 are disposed so as to overlap the large-capacity hydrogen tank 24 in the vehicle width direction and the height direction.

### Operation of the Embodiment

In a conventional engine-powered vehicle with a front-engine, rear-wheel-drive layout, a propeller shaft is disposed in a center tunnel to transmit power from the engine installed at the front of the vehicle to the rear wheels. In the present embodiment, the hydrogen engine 11, which is used to generate power, is installed in the front portion of the hydrogen-engine vehicle 10. Further, the electric drive unit 21, which drives the rear wheels 20 by receiving the supply of power, is installed in the rear portion of the hydrogen-engine vehicle 10. In this manner, a front-engine, rear-wheel-drive vehicle layout is employed. Such a hydrogen-engine vehicle 10 eliminates the need for a propeller shaft and thus allows a hydrogen tank to be installed inside the center tunnel 34.

In the present embodiment, the large-capacity hydrogen tank 24 is installed inside the center tunnel 34. Even when only one large-capacity hydrogen tank 24 is installed, a space in which a small-diameter hydrogen tank is installable is left inside the center tunnel 34. Thus, in the present embodiment, in addition to the large-capacity hydrogen tank 24, two small-capacity hydrogen tanks 25, each having a cylindrical shape with a smaller diameter than the large-capacity hydrogen tank 24, are installed inside the center tunnel 34.

Referring to Fig. 4, an approach for efficiently arranging the large-capacity hydrogen tank 24 and the small-capacity hydrogen tanks 25 inside the center tunnel 34 will be described. In the following description, the dimension of the center tunnel 34 in the vehicle width direction will be referred to as the width W of the center tunnel 34. The dimension in the height direction from the lower-limit position of the installation space to the upper end of the center tunnel 34 will be referred to as the height H of the center tunnel 34.

First, the small-capacity hydrogen tank 25 may be installed at a position indicated by the broken line P1 in Fig. 4 with respect to the large-capacity hydrogen tank 24; that is, the large-capacity hydrogen tank 24 and the small-capacity hydrogen tank 25 may be installed side by side in the vehicle width direction. In this case, the large-capacity hydrogen-tank 24 and the small-capacity hydrogen-tank 25 are installed in the center tunnel 34 on condition that the sum of the diameter D1 of the large-capacity hydrogen tank 24 and the diameter D2 of the small-capacity hydrogen tank 25 is less than or equal to the width W of the center tunnel 34 (D1 + D2 ≤ W). In this case, the large-capacity hydrogen tank 24 and the small-capacity hydrogen tank 25 overlap in the height direction, but not in the vehicle width direction.

Next, the small-capacity hydrogen tank 25 may be installed at a position indicated by the broken line P2 in Fig. 4 with respect to the large-capacity hydrogen tank 24; that is, the large-capacity hydrogen tank 24 and the small-capacity hydrogen tank 25 may be installed side by side in the height direction. In this case, the large-capacity hydrogen-tank 24 and the small-capacity hydrogen-tank 25 are installed in the center tunnel 34 on condition that the sum of the diameter D1 of the large-capacity hydrogen tank 24 and the diameter D2 of the small-capacity hydrogen tank 25 is less than or equal to the height H of the center tunnel 34 (D1 + D2 :5 H). In this case, the large-capacity hydrogen tank 24 and the small-capacity hydrogen tank 25 overlap in the vehicle width direction, but not in the height direction.

Finally, for example, as shown by the solid line in Fig. 4, the small-capacity hydrogen tank 25 may be installed at a position overlapping the large-capacity hydrogen tank 24 in both the vehicle width direction and the height direction. That is, the small-capacity hydrogen tank 25 is installed such that at least part of the small-capacity hydrogen tank 25 is positioned in the range indicated by hatching in Fig. 4. Such a configuration allows the large-capacity hydrogen tank 24 and the small-capacity hydrogen tank 25, having a total diameter (D1 + D2) exceeding the width W and the height H of the center tunnel 34, to be installed inside the center tunnel 34. Thus, even if the large-capacity hydrogen tank 24 has the same diameter D1 as that in the above two cases, the small-capacity hydrogen tank 25 having a larger diameter D2 and a larger volume than that in the above two case are installable inside the center tunnel 34.

The interior of the center tunnel 34 refers to a section within the underfloor space of the passenger compartment 12 that is located below the floor tunnel 30A. The installation of a hydrogen tank inside the center tunnel 34 means that the installation of the hydrogen tank with at least part of the hydrogen tank positioned inside the center tunnel 34.

### Advantages of the Embodiment

The hydrogen-engine vehicle 10 of the present embodiment has the following advantages.
(1) The hydrogen-engine vehicle 10 includes the hydrogen engine 11, which is located in front of the passenger compartment 12. The hydrogen-engine vehicle 10 further includes the center tunnel 34, which is located at the central portion in the vehicle width direction below the floor of the passenger compartment 12 and extending in the front-rear direction. Inside the center tunnel 34, the large-capacity hydrogen tank 24, which is cylindrical, is installed. Further, inside the center tunnel 34, two cylindrical small-capacity hydrogen tanks 25, each having a smaller diameter than the large-capacity hydrogen tank 24, are installed in the vicinity of the large-capacity hydrogen tank 24. The small-capacity hydrogen tanks 25 are disposed so as to overlap the large-capacity hydrogen tank 24 in the vehicle width direction and the height direction. This arrangement reduces the space required for arranging the hydrogen tanks 24 and 25 in the vehicle width direction and the height direction. As a result, the total capacity of hydrogen tanks installable in a limited space is increased. Accordingly, the capacity of hydrogen tanks installable below the floor of the passenger compartment 12 of the hydrogen-engine vehicle 10 is increased.
(2) The hydrogen-engine vehicle 10 includes the generator 15, which is installed in front of the passenger compartment 12, and the electric drive unit 21, which is supplied with power to drive the rear wheels 20. The hydrogen engine 11, which is mounted on the hydrogen-engine vehicle 10, is a dedicated power-generation engine that drives the generator 15. In such a hydrogen-engine vehicle 10, even if a propeller shaft that transmits the power of the hydrogen engine 11 to the rear wheels 20 is not installed inside the center tunnel 34, a front-engine, rear-wheel-drive vehicle layout is provided. Accordingly, the large-capacity hydrogen tank 24 and the small-capacity hydrogen tanks 25 are installable inside the center tunnel 34.
(3) The hydrogen engine 11 of the hydrogen-engine vehicle 10 includes the catalyst device 17, which purifies exhaust gas by selective catalytic reduction using urea as a reducing agent. In the hydrogen-engine vehicle 10, a pipe that supplies urea solution from the urea-solution tank 18 to the exhaust pipe 16 of the hydrogen engine 11 also needs to be installed below the floor of the passenger compartment 12. Routing a long pipe below the floor of the passenger compartment 12 reduces the installment space for hydrogen tanks. In the hydrogen-engine vehicle 10 of the present embodiment, the urea-solution tank 18, which stores urea solution, is installed in front of each small-capacity hydrogen tank 25 below the floor of the passenger compartment 12. Since the urea-solution tank 18 is disposed in the vicinity of the hydrogen engine 11, the pipe that supplies urea solution is shortened. Accordingly, a reduction in hydrogen-tank capacity associated with installation of the urea-solution tank 18 and related components is mitigated.
(4) The exhaust pipe 16 of the hydrogen engine 11 of the present embodiment, which extends in the front-rear direction, is installed below the floor of the passenger compartment 12 of the hydrogen engine 11. The left side surface of the hydrogen engine 10 is provided with the urea-solution filling port 19, through which urea solution is filled into the urea-solution tank 18 from outside the hydrogen-engine vehicle 10. Further, the urea-solution tank 18 is installed on the left side of the center tunnel 34 below the floor of the passenger compartment 12. In the hydrogen-engine vehicle 10, the urea-solution tank 18 and the urea-solution filling port 19 are disposed laterally of the center tunnel 34 on the side opposite the exhaust pipe 16. Since the urea-solution tank 18 is located away from the exhaust pipe 16, the urea-solution tank 18 is protected from heat damage that results from high-temperature exhaust gas flowing through the exhaust pipe 16.

### Modifications

The above embodiment may be modified as described below. The above embodiment and the following modifications can be combined as long as the combined modifications remain technically consistent with each other.

The urea-solution tank 18 and the urea-solution filling port 19 may be installed at positions different from those in Fig. 1. When, for example, the urea-solution tank 18 is made of a heat-resistant material, the urea-solution tank 18 and the urea-solution filling port 19 may be disposed laterally of the center tunnel 34 on the same side as the exhaust pipe 16.

When exhaust gas in the hydrogen engine 11 is not purified by selective catalytic reduction using urea, the hydrogen-engine vehicle 10 does not have to include the catalyst device 17, which performs selective catalytic reduction, the urea-solution tank 18, and the urea-solution filling port 19.

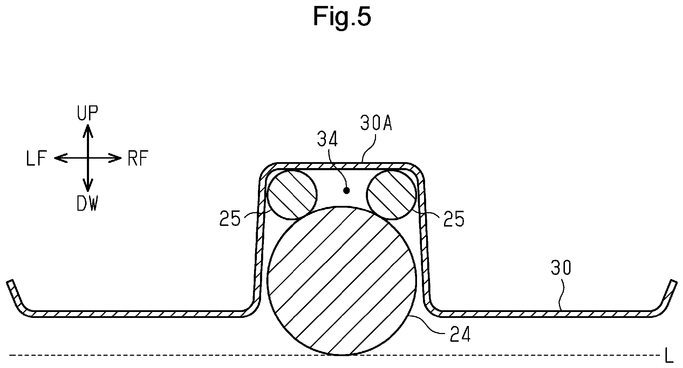

For example, as shown in Fig. 5, each small-capacity hydrogen tank 25 may be disposed at a position different from that shown in Fig. 4. In Fig. 5, two small-capacity hydrogen tanks 25 are installed above the large-capacity hydrogen tank 24. In this case, the two small-capacity hydrogen tanks 25 are disposed so as to overlap the large-capacity hydrogen tank 24 in the vehicle width direction and the height direction. Thus, even in the arrangement of Fig. 5, the total capacity of hydrogen tanks that are installable inside the center tunnel 34 is increased. In addition, the positions of the small-capacity hydrogen tanks 25 may be changed as long as they are installed so as to overlap the large-capacity hydrogen tank 24 in both the vehicle width direction and the height direction.

The number of the small-capacity hydrogen tanks 25 installed inside the center tunnel 34 together with the large-capacity hydrogen tank 24 is not limited to two. For example, one large-capacity hydrogen tank 24 and one small-capacity hydrogen tank 25 may be installed inside the center tunnel 34. Further, one large-capacity hydrogen tank 24 and three or more small-capacity hydrogen tanks 25 may be installed inside the center tunnel 34.

When multiple small-capacity hydrogen tanks 25 are provided, their diameters and longitudinal lengths may be different from each other.

The longitudinal length of each small-capacity hydrogen tank 25 may be greater than or equal to that of the large-capacity hydrogen tank 24.

The seat layout of the hydrogen-engine vehicle 10 may be changed.

The hydrogen-engine vehicle 10 may be a four-wheel-drive hybrid electric vehicle in which the front wheels are driven by power from the hydrogen engine 11. In this case, the generator 15 may also function as an electric motor that generates a driving force. Instead, the hydrogen-engine vehicle 10 may be a front-wheel-drive hybrid electric vehicle without the electric drive unit 21, which drives the rear wheels 20. Alternatively, the hydrogen-engine vehicle 10 may be a front-wheel-drive engine-powered vehicle that runs solely on power from the hydrogen engine 11. That is, the arrangement of the large-capacity hydrogen tank 24 and the small-capacity hydrogen tanks 25 in the hydrogen-engine vehicle 10 of the above embodiment and modifications may be applicable to any hydrogen-engine vehicle in which the hydrogen engine 11 is installed in the front portion of the hydrogen-engine vehicle 10 and which does not include a power transmission mechanism (e.g., a propeller shaft) that transmits the power of the hydrogen engine 11 to the rear wheels 20.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A hydrogen-engine vehicle (10) in which a hydrogen engine (11) is mounted in front of a passenger compartment (12), the hydrogen-engine vehicle (10) comprising:
a center tunnel (34) provided at a central portion in a vehicle width direction below a floor of the passenger compartment (12) and extending in a front-rear direction;
a cylindrical large-capacity hydrogen tank (24); and
a cylindrical small-capacity hydrogen tank (25) having a smaller diameter than the large-capacity hydrogen tank (24), wherein
the large-capacity hydrogen tank (24) is installed such that at least part of the large-capacity hydrogen tank (24) is located inside the center tunnel (34), and
the small-capacity hydrogen tank (25) is disposed so as to overlap the large-capacity hydrogen tank (24) in the vehicle width direction and a height direction.

2. The hydrogen-engine vehicle (10) according to claim 1, further comprising:
a generator (15) installed in front of the passenger compartment (12); and
an electric drive unit (21) that is supplied with power to drive a rear wheel, wherein
the hydrogen engine (11) is a dedicated power-generation engine that drives the generator (15).

3. The hydrogen-engine vehicle (10) according to claim 1 or 2, wherein
a urea-solution tank (18) that stores urea solution is installed in front of the small-capacity hydrogen tank (25) below the floor of the passenger compartment (12).

4. The hydrogen-engine vehicle (10) according to claim 3, wherein
an exhaust pipe (16) of the hydrogen engine (11) extending in the front-rear direction is installed below the floor of the passenger compartment (12),
a side surface of the hydrogen-engine vehicle (10) is provided with a urea-solution filling port (19) through which urea solution is filled into the urea-solution tank (18) from outside the hydrogen-engine vehicle (10), and
the urea-solution tank (18) and the urea-solution filling port (19) are disposed laterally of the center tunnel (34) on a side opposite the exhaust pipe (16).
